# EUROPÄISCHE PATENTSCHRIFT

(11) **EP 3 855 390 B1**
(45) Veröffentlichungstag und Bekanntmachung des Hinweises auf die Patenterteilung: **26.04.2023**
(21) Anmeldenummer: 20153587.9
(22) Anmeldetag: 24.01.2020
(51) Int. Cl.: G06T 7/00, G03H 1/00

(54) **VERFAHREN ZUM ERZEUGEN EINER INFORMATION AUS MINDESTENS EINEM KAMERABILD**
METHOD FOR GENERATING INFORMATION FROM AT LEAST ONE CAMERA IMAGE
PROCÉDÉ DE GÉNÉRATION DES INFORMATIONS À PARTIR D'AU MOINS UNE IMAGE DE CAMÉRA

(43) Veröffentlichungstag der Anmeldung: 28.07.2021
(73) Patentinhaber: Fraunhofer-Gesellschaft zur Förderung der angewandten Forschung e.V., 80686 München (DE)
(72) Erfinder: Seyler, Tobias, 79110 Freiburg (DE); Beckmann, Tobias, 79211 Denzlingen (DE)
(74) Vertreter: WSL Patentanwälte Partnerschaft mbB

(56) Entgegenhaltungen:
- US-A1- 2017 140 144
- US-B2- 7 038 787

## Beschreibung

Die vorliegende Erfindung betrifft ein Verfahren zum Erzeugen einer Information aus mindestens einem Kamerabild eines Objekts mit den Schritten
A) Aufnehmen von Rohbilddaten des mindestens einen Kamerabildes,
B) Auswerten der Rohbilddaten des mindestens einen Kamerabildes in einer Mehrzahl von Auswertungsschritten,
   wobei in zumindest einem aus der Mehrzahl von Auswertungsschritten die Rohbilddaten des mindestens einen Kamerabildes oder aus den Rohbilddaten des mindestens einen Kamerabildes abgeleitete Bilddaten mittels einer mathematischen Verknüpfung derart miteinander verarbeitet werden, dass Kombinationsbilddaten erzeugt werden,
C) Ableiten der Information aus den Kombinationsbilddaten und
D) Ausgeben der Information
E) Bestimmen (200, 210) eines Ist-Maßes für eine Datenqualität der Rohbilddaten mindestens eines Kamerabildes vor oder nach zumindest einem aus der Mehrzahl von Auswertungsschritten in Schritt B),
F) Bestimmen (300, 310) einer Abweichung zwischen dem Ist-Maß für die Datenqualität und einem Soll-Maß für die Datenqualität der Rohbilddaten mindestens eines Kamerabildes, und
G) erneutes Aufnehmen (100) aller Rohbilddaten derjenigen Kamerabilder, für welche die in Schritt F) bestimmte Abweichung größer ist als ein vorgegebener Schwellenwert und erneutes Ausführen zumindest eines Auswertungsschrittes aus Schritt B) und der Schritte C) bis F) entweder bis die in Schritt F) bestimmte Abweichung für die Rohbilddaten aller Kamerabilder aus der Mehrzahl von Kamerabildern kleiner ist als der Schwellenwert oder bis eine vorgegebene Abbruchbedingung erfüllt ist.

Die vorliegende Erfindung betrifft zudem eine Vorrichtung zum Ausführen eines solchen Verfahrens.

Das Auswerten von Rohbilddaten eines oder einer Mehrzahl von Kamerabildern erfolgt schrittweise, wobei in Abhängigkeit von der Art der Aufnahme der Rohbilddaten des Kamerabildes in einem oder mehreren Auswertungsschritten die Rohbilddaten eines oder mehrerer Bilder mit einer mathematischen Verknüpfung verarbeitet werden, sodass Kombinationsbilddaten erzeugt werden. Dabei wird im Stand der Technik erst nach dem Ableiten der Information aus den Kombinationsbilddaten erkennbar, ob die Rohbilddaten fehlerhaft waren oder nicht. Im Falle eines Fehlers in den Rohbilddaten muss dann die Aufnahme der Rohbilddaten des mindestens einen Kamerabildes wiederholt und die gesamte Auswertung der Rohbilddaten erneut durchlaufen werden. Damit geht überflüssiger Rechenaufwand und ein erheblicher Zeitverlust einher.

Die US 2017/0140144 A1 offenbart ein mobiles Endgerät mit einer Bildaufnahmevorrichtung mit einem Abbildungselement (CCD) und einem Beleuchtungselement zum Erfassen eines Bildes eines Hologramms und zum Senden des Bild des Hologramms an einen Server zur Authentifizierung des Bildes und zur Autorisierung einer Transaktion.

Das Patent US 7,038,787 B2 offenbart weiterhin Systeme und Verfahren für die inhaltsbasierte, direkt-digitale Holographie mit off-axis Beleuchtung. Ein Verfahren umfasst die Berechnung eines Beleuchtungswinkels relativ zu einer optischen Achse, die durch eine Fokussierlinse definiert ist, als eine Funktion von Daten, die ein Fourier-analysiertes räumliches Hologramm darstellen, das Reflektieren eines Referenzstrahls von einem Referenzspiegel unter einem nicht normalen Winkel, das Reflektieren eines Objektstrahls von einem Objekt, wobei der Objektstrahl auf das Objekt unter dem Beleuchtungswinkel einfällt, das Fokussieren des Referenzstrahls und des Objektstrahls in einer Brennebene eines digitalen Aufzeichnungsgeräts, um aus dem inhaltsbasierten off-axis beleuchteten räumlichen Überlagerungshologramm räumliche Überlagerungsstreifen für die Fourier-Analyse zu erzeugen, und das digitale Aufzeichnen des inhaltsbasierten off-axis beleuchteten räumlichen Überlagerungshologramms, das räumliche Überlagerungsstreifen für die Fourier-Analyse enthält.

Demgegenüber ist es Aufgabe der vorliegenden Erfindung, ein holographisches Verfahren zum Erzeugen einer Information aus mindestens einem Kamerabild eines Objekts bereitzustellen, welches auch bei fehlerhaften Rohbilddaten mit einem verringerten Aufwand ausführbar ist. Ferner ist es Aufgabe der vorliegenden Erfindung eine Vorrichtung zum Ausführen eines solchen Verfahrens bereitzustellen.

Die zuvor genannte Aufgabe wird erfindungsgemäß durch ein Verfahren zum Erzeugen einer Information aus mindestens einem Kamerabild eines Objekts gelöst, wobei das Verfahren die Schritte aufweist
A) Aufnehmen von Rohbilddaten des mindestens einen Kamerabildes,
B) Auswerten der Rohbilddaten des mindestens einen Kamerabildes in einer Mehrzahl von Auswertungssch ritten,
   wobei in zumindest einem aus der Mehrzahl von Auswertungsschritten die Rohbilddaten des mindestens einen Kamerabildes oder aus den Rohbilddaten des mindestens einen Kamerabildes abgeleitete Bilddaten mittels einer mathematischen Verknüpfung derart miteinander verarbeitet werden, dass Kombinationsbilddaten erzeugt werden,
C) Ableiten der Information aus den Kombinationsbilddaten,
D) Ausgeben der Information,
E) Bestimmen eines Ist-Maßes für eine Datenqualität der Rohbilddaten des mindestens einen Kamerabildes vor oder nach zumindest einem aus der Mehrzahl von Auswertungsschritten in Schritt B),
F) Bestimmen einer Abweichung zwischen dem Ist-Maß für die Datenqualität und einem Soll-Maß für die Datenqualität der Rohbilddaten mindestens eines Kamerabildes und
G) erneutes Aufnehmen aller Rohbilddaten derjenigen Kamerabilder, für welche die in Schritt F) bestimmte Abweichung größer ist als ein vorgegebener Schwellenwert und erneutes Ausführen zumindest eines Auswertungsschrittes aus Schritt B) und der Schritte C) bis F) entweder bis die in Schritt F) bestimmte Abweichung für die Rohbilddaten aller Kamerabilder aus der Mehrzahl von Kamerabildern kleiner ist als der Schwellenwert oder bis eine vorgegebene Abbruchbedingung erfüllt ist,

wobei das Verfahren ein holographisches Verfahren ist und das Verfahren den Schritt aufweist Beleuchten des Objekts mit genau einer diskreten Wellenlänge oder mit elektromagnetischer Strahlung mit einer Mehrzahl von diskreten Wellenlängen,
wobei die Kombinationsbilddaten ein holographisches Bild repräsentieren und die erzeugte Information entweder eine räumliche Phasenverteilung der von dem Objekt zumindest reflektierten oder gestreuten elektromagnetischen Strahlung jeweils genau einer Wellenlänge oder eine räumliche Verteilung einer synthetischen Phase der von dem Objekt zumindest reflektierten oder gestreuten elektromagnetischen Strahlung mit der Mehrzahl von diskreten Wellenlängen beinhaltet, und
wobei das Ist-Maß für die Datenqualität der Rohbilddaten ausgewählt ist aus einer Gruppe die besteht aus Parametern einer Phasenschiebungsoperation auf den Kombinationsbilddaten, einer Korrelation zwischen den Kombinationsbilddaten des Objekts und den Kombinationsbilddaten eines Referenzobjekts, einer mittleren Amplitude der Kombinationsbilddaten und einem Kontrast einer bekannten Struktur des Objekts in den Kombinationsbilddaten.

Es ist die grundlegende Idee der vorliegenden Erfindung, die Datenqualität der Rohbilddaten mindestens eines Kamerabildes zu bestimmen, bevor die Information aus den Kombinationsbilddaten abgeleitet wird. Damit kann zumindest der Schritt des Ableitens der Information aus den Kombinationsbilddaten (Schritt C)) eingespart werden, wenn sich herausstellt, dass die Rohbilddaten des mindestens einen Kamerabildes keine hinreichend hohe Qualität hatten, um die Information aus den Kombinationsbilddaten zu erhalten. Dabei werden gemäß Schritt G) diejenigen Kamerabilder, für welche die in Schritt F) bestimmte Abweichung größer ist als ein vorgegebener Schwellenwert verworfen, dann erneut aufgenommen und die Auswertung erneut durchgeführt, bis die Abweichung des Ist-Maßes von dem Soll-Maß für die Datenqualität der Rohbilddaten kleiner ist als der Schwellenwert oder bis eine Abbruchbedingung erreicht ist. Dies spart zumindest Rechenaufwand oder -zeit.

Die Abbruchbedingung ist in einer Ausführungsform eine vorgegebene maximale Anzahl des erneuten Ausführens der Schritte B) bis F). Auf diese Weise wird verhindert, dass dann, wenn die Rohbilddaten zumindest eines Kamerabildes immer schlechter sind als die vorgegebene Schwelle, der Wiederholungsprozess unendlich lange läuft.

Bei dem Auswerten der Rohbilddaten des mindestens einen Kamerabildes in Schritt B) werden in mindestens einem Auswertungsschritt entweder die Rohbilddaten des mindestens einen Kamerabildes oder aus diesen Rohbilddaten abgeleitete Bilddaten durch eine mathematische Verknüpfung miteinander verarbeitet. Dies geschieht in einer Ausführungsform der Erfindung durch mathematische Verknüpfung zumindest zweier Elemente der Rohbilddaten eines einzigen Kamerabildes. Ein Beispiel für eine derartige Auswertung der Rohbilddaten ist die Trennung zweier gleichzeitig eingekoppelter Laser im Frequenzraum und die anschließende getrennte Berechnung des aufgezeichneten Interferenzkontrastes. Dabei werden in Schritt B) aus den Rohbilddaten eines einzigen Kamerabildes erste und zweite Bilddaten abgeleitet, die dann mittels einer mathematischen Verknüpfung miteinander verarbeitet werden, sodass die Kombinationsbilddaten erzeugt werden. Ist der Interferenzkontrast für einen der beiden Laser deutlich niedriger, so ist davon auszugehen, dass dieser Laser nicht stabil läuft.

In einer Ausführungsform der Erfindung werden daher in Schritt A) die Rohbilddaten genau eines Kamerabildes aufgenommen und in Schritt B) werden in zumindest einem aus der Mehrzahl von Auswertungsschritten aus den Rohbilddaten des genau einen Kamerabildes abgeleitete erste Bilddaten und aus den Rohbilddaten des genau einen Kamerabildes abgeleitete zweite Bilddaten mittels einer mathematischen Verknüpfung miteinander verarbeitet, sodass die Kombinationsbilddaten erzeugt werden.

In einer Ausführungsform der Erfindung, bei der in Schritt A) die Rohbilddaten genau eines Kamerabildes aufgenommen werden, wird der Erfindung das Ist-Maß für die Datenqualität der Rohbilddaten vor dem Auswertungsschritt in Schritt B), bei welchem die abgeleiteten Bilddaten mittels einer mathematischen Verknüpfung verarbeitet werden, bestimmt. Auf diese Weise lässt sich im Falle, dass das Bestimmen der Abweichung in Schritt F) ergibt, dass die Datenqualität der Rohbilddaten nicht ausreichend war, der Auswertungsschritt mit der mathematischen Verknüpfung einsparen und das Aufnehmen der Rohbilddaten mit der nachfolgenden Auswertung in den Schritten A) und B) wiederholen. Zudem kann in einer Ausführungsform auf ein zweitaufwändiges Übertragen der Rohbilddaten von einem Kamerarechner an einen Verarbeitungsrechner verzichtet werden.

In einer Ausführungsform der Erfindung werden in Schritt A) die Rohbilddaten einer Mehrzahl von Kamerabildern aufgenommen und in Schritt B) werden in zumindest einem aus der Mehrzahl von Auswertungsschritten entweder die Rohbilddaten eines ersten aus der Mehrzahl von Kamerabildern oder aus den Rohbilddaten des ersten Kamerabildes abgeleitete Bilddaten und entweder die Rohbilddaten eines zweiten aus der Mehrzahl von Kamerabildern oder aus den Rohbilddaten des zweiten Kamerabildes abgeleitete Bilddaten mittels einer mathematischen Verknüpfung miteinander verarbeitet, sodass die Kombinationsbilddaten erzeugt werden.

In einer Ausführungsform der Erfindung werden die Rohbilddaten der Mehrzahl von Kamerabildern zeitlich nacheinander aufgenommen.

Je nach Messverfahren werden die Schritte E) und F) zumindest ausgeführt
- nach Schritt A) und vor Schritt B), oder
- nach einem aus der Mehrzahl von Auswertungsschritten in B), wobei das Ist-Maß für die Datenqualität der Rohbilddaten in Schritt E) anhand der aus den Rohbilddaten abgeleiteten Bilddaten bestimmt wird, oder
- nach Schritt B) und vor Schritt C), wobei das Ist-Maß für die Datenqualität der Rohbilddaten in Schritt E) anhand der Kombinationsbilddaten bestimmt wird, oder
- in Schritt C), wobei das Ist-Maß für die Datenqualität der Rohbilddaten in Schritt E) anhand einer Kombination einer Mehrzahl von Kombinationsbilddaten bestimmt wird.

Während die Vorteile der vorliegenden Erfindung bereits dann realisiert werden können, wenn die Schritte E) bis G) zumindest einmal nach dem Aufnehmen der Rohbilddaten in Schritt A) ausgeführt, werden in einer Ausführungsform der Erfindung die Schritte E) bis G) mehrfach und an verschiedenen Punkten im Verfahren ausgeführt. Im letzteren Fall dienen dann unterschiedliche Kriterien als Maß für die Datenqualität der Rohbilddaten.

Als Maß für die Datenqualität der Rohbilddaten kommen unmittelbare Kriterien, wie beispielswiese eine Umgebungsbedingung während des Aufnehmens der Rohbilddaten, aber auch mittelbare Kriterien, wie beispielsweise eine Bildeigenschaft der Rohbilddaten oder der aus den Rohbilddaten abgeleiteten Bilddaten, in Betracht.

In einer Ausführungsform der Erfindung wird während des Aufnehmens der Rohbilddaten in Schritt A) eine Umgebungsbedingung mittels einer Messgröße erfasst, wobei diese Messgröße das Ist-Maß für die Datenqualität der Rohbilddaten und ein vorgegebener Wert für diese Messgröße das Soll-Maß für die Datenqualität der Rohbilddaten bildet. Dabei wird unter einer Umgebungsbedingung eine Bedingung in der Umgebung einer Kamera, mit welcher die Rohbilddaten erfasst werden, und/oder des Objekts verstanden.

In einer Ausführungsform der Erfindung ist die Messgröße ausgewählt aus einer Gruppe bestehend aus einer Vibration des Objekts und/oder einer Kamera zum Erfassen des Objekts, einer Relativbewegung zwischen dem Objekt und der Kamera, einem Schalldruck, einer Helligkeit, einer Temperatur und einer Luftbewegung zwischen der Kamera und dem Objekt oder einer Kombination davon. Die Umgebungsbedingungen von Kamera und/oder Objekt haben einen unmittelbaren Einfluss auf die Datenqualität der Rohbilddaten.

Wird das Aufnehmen der Rohbilddaten durch eine Umgebungsbedingung beeinflusst bzw. gestört, so ändert sich die Datenqualität der Rohbilddaten. Zumeist wird die Datenqualität der Rohbilddaten durch eine Änderung der Umgebungsbedingung vermindert. Ein eingängiges Beispiel hierfür ist eine Erschütterung der Kamera während des Ausführens des Schritts A), d.h. dem Aufnehmen der Rohbilddaten. Vibriert die Kamera zu stark, so werden die Rohbilddaten "verwackelt" sein. Erfasst man nun die Umgebungsbedingung während des Aufnehmens aller Rohbilddaten einer Mehrzahl von Kamerabildern, so können bereits unmittelbar nach dem Ausführen des Schritts A) diejenigen Kamerabilder verworfen werden, deren Datenqualität mit hoher Wahrscheinlichkeit nicht ausreichend ist. Nur diese verworfenen Kamerabilder müssen dann erneut aufgenommen werden.

Es ist jedoch auch möglich, zusätzlich oder alternativ das Ist-Maß für die Datenqualität der Rohbilddaten aus den Rohbilddaten selbst oder aus aus den Rohbilddaten abgeleiteten Bilddaten eines Kamerabilds zu bestimmen.

Daher ist in einer Ausführungsform der Erfindung das Ist-Maß für die Datenqualität der Rohbilddaten ausgewählt aus einer Gruppe, die besteht aus einer mittleren Helligkeit der Rohbilddaten oder der abgeleiteten Bilddaten eines Kamerabildes, dem Kontrast der Rohbilddaten oder der abgeleiteten Bilddaten eines Kamerabildes, einer Korrelation der Rohbilddaten oder der abgeleiteten Bilddaten zweier verschiedener Kamerabilder des gleichen Objekts, einer Änderung der Helligkeit oder des Kontrasts zwischen den Rohbilddaten und den abgeleiteten Bilddaten zweier verschiedener Kamerabilder des gleichen Objekts oder irgendeiner Kombination davon.

In einer Ausführungsform der Erfindung werden die Schritte E) und F) nach dem Schritt A) und vor dem Schritt B) auf einem Kamerarechner ausgeführt, wobei vor dem Schritt B) die Rohbilddaten von dem Kamerarechner an einen Verarbeitungsrechner übertragen werden und die Auswertungsschritte des Schritts B) auf dem Verarbeitungsrechner ausgeführt werden. Eine solche Ausführungsform ist zweckmäßig, weil sie eine erste Überprüfung der Datenqualität vor dem zeitaufwendigen Übertragen der Rohbilddaten von dem Kamerarechner an den Verarbeitungsrechner ausführt. In einer Ausführungsform sind der Kamerarechner und der Verarbeitungsrechner zwei voneinander getrennte Prozessoren des gleichen Computers.

In einer weiteren Ausführungsform werden die Schritte E) und F) auf dem Kamerarechner ausgeführt, wobei ein erster Auswertungsschritt des Schritts B) ebenfalls auf dem Kamerarechner ausgeführt wird und ein zweiter Auswertungsschritt des Schritts B) auf dem Verarbeitungsrechner ausgeführt wird und wobei die abgeleiteten Bilddaten nach dem ersten Auswertungsschritt und vor dem zweiten Auswertungsschritt von dem Kamerarechner an den Verarbeitungsrechner übertragen werden. Auch in einer solchen Ausführungsform findet zumindest ein erster Auswertungsschritt des Schritts B) noch auf dem Kamerarechner statt, bevor die abgeleiteten Bilddaten an den Verarbeitungsrechner übertragen werden. Auch in diesem Fall sorgt eine erste Überprüfung der Datenqualität auf dem Kamerarechner dafür, dass die Datenqualität vor der zeitaufwendigen Übertragung der aus den Rohbilddaten abgeleiteten Bilddaten von dem Kamerarechner an den Verarbeitungsrechner erfolgt. Im Falle, dass die Rohbilddaten eines oder mehrerer Kamerabilder verworfen und erneut aufgenommen werden müssen, erhält man eine erhebliche Einsparung von Verarbeitungszeit.

Das erfindungsgemäße Verfahren ist ein interferometrisches oder holographisches Verfahren und das Verfahren weist den Schritt auf, Beleuchten des Objekts mit elektromagnetischer Strahlung mit genau einer diskreten Wellenlänge oder mit einer Mehrzahl von diskreten Wellenlängen, wobei die Kombinationsbilddaten ein interferometrisches oder holographisches Bild repräsentieren und die erzeugte Information eine räumliche Phasenverteilung der von dem Objekt zumindest reflektierten oder gestreuten elektromagnetischen Strahlung jeweils genau einer Wellenlänge beinhalten.

Ein Beispiel für Messverfahren, welche immer auf der mathematischen Verknüpfung von Rohbilddaten oder aus den Rohbilddaten abgeleiteten Bilddaten mittels einer mathematischen Verknüpfung miteinander beruhen, sodass Kombinationsbilddaten erzeugt werden, sind alle interferometrischen oder holographischen Verfahren.

Ein einfaches Interferogramm oder Hologramm generiert aus den Rohdaten eines oder mehrerer Kamerabilder einer Wellenlänge eine, vorzugsweise komplexwertige, räumliche Phasenverteilung als Kombinationsbilddaten im Sinne der vorliegenden Anmeldung.

Es versteht sich, dass sich in einer Ausführungsform Verarbeitungszeit und Rechenleistung reduzieren lassen, wenn alle Kamerabilder, die zu den Kombinationsbilddaten mathematisch verknüpft werden, eine ausreichende Datenqualität ihrer Rohbilddaten aufweisen, bevor die rechenaufwendige mathematische Verknüpfung erfolgt.

Das erfindungsgemäße Verfahren wird gemäß einer Alternative für die Differenzholographie oder Mehrwellenlängenholographie eingesetzt. Dabei wird eine räumliche Verteilung der Phasenlage einer durch Differenz zweier diskreter Wellenlängen gebildeten synthetischen Wellenlänge (synthetische Phase) der von dem Objekt reflektierten oder gestreuten elektromagnetischen Strahlung mit einer Mehrzahl von diskreten Wellenlängen betrachtet. Daher ist das Verfahren ein holographisches Verfahren und das Verfahren umfasst den Schritt Beleuchten des Objekts mit elektromagnetischer Strahlung mit einer Mehrzahl von diskreten Wellenlängen, wobei die Kombinationsbilddaten ein holographisches Bild repräsentieren und die erzeugte Information eine räumliche Verteilung einer synthetischen Phase der von dem Objekt zumindest reflektierten oder gestreuten elektromagnetischen Strahlung mit der Mehrzahl von diskreten Wellenlängen beinhaltet.

Dabei ist das Ist-Maß für die Datenqualität der Rohbilddaten ausgewählt aus einer Gruppe, die besteht aus Parametern einer Phasenverschiebungsoperation auf den Kombinationsdaten, einer Korrelation zwischen den Kombinationsbilddaten des Objekts und den Kombinationsbilddaten eines Referenzobjekts, einer mittleren Amplitude der Kombinationsbilddaten, und einem Kontrast einer bekannten Struktur des Objekts in den Kombinationsbilddaten. Mit anderen Worten ausgedrückt, werden die Kombinationsbilddaten, welche das holographische Bild repräsentieren, für das Bestimmen des Ist-Maßes für die Datenqualität der Rohbilddaten herangezogen.

In einer Ausführungsform der Erfindung wird in Schritt A) für die Mehrzahl von diskreten Wellenlängen jeweils eine Mehrzahl von Rohbilddaten einer Mehrzahl von Kamerabildern aufgenommen, wobei in Schritt B) für jede aus der Mehrzahl von diskreten Wellenlängenkombinationsbilddaten in Form eines Hologramms erzeugt werden und wobei in Schritt C) aus den Kombinationsbilddaten der Mehrzahl von diskreten Wellenlängen ein Differenzhologramm erzeugt wird.

In einer Ausführungsform der Erfindung wird in Schritt C) aus einer Mehrzahl von Differenzhologrammen eine Höhenkarte einer Oberfläche des Objekts als Information berechnet.

In einer Ausführungsform der Erfindung ist das Ist-Maß für die Datenqualität der Rohbilddaten ausgewählt aus einer Gruppe, die besteht aus einem Phasenrauschen in mindestens einem Differenzhologramm über einen ausgewählten Abschnitt des Objekts, einem Phasenrauschen in mindestens einem Differenzhologramm über einen Abschnitt eines Referenzkörpers mit bekannter Form, einer Korrelation zwischen dem Phasenrauschen in den Differenzhologrammen eines Abschnitts des Objekts und eines Abschnitts des Referenzkörpers, einer Korrelation zwischen einer Amplitude in dem Differenzhologramm des Objekts und einer Amplitude in dem Differenzhologramm eines Referenzkörpers, einer Verkippung der räumlichen Verteilung der synthetischen Phase der von dem Objekt zumindest reflektierten oder gestreuten elektromagnetischen Strahlung während einer ersten Auswahl an Wellenlängen aus der Mehrzahl von diskreten Wellenlängen und der räumlichen Verteilung der synthetischen Phase der von dem Objekt zumindest reflektierten oder gestreuten elektromagnetischen Strahlung mit einer zweiten Auswahl an Wellenlängen aus der Mehrzahl von diskreten Wellenlängen, einem Vergleich einer mit einer ersten synthetischen Wellenlänge aufgenommen Form eines Oberflächenabschnitts des Objekts und der mit einer zweiten synthetischen Wellenlänge aufgenommenen Form des gleichen Oberflächenabschnitts des Objekts.

Die oben genannte Aufgabe wird zudem auch durch eine Vorrichtung zum Erzeugen einer Information aus mindestens einem Kamerabild eines Objekts gelöst, wobei die Vorrichtung aufweist
eine Kamera, wobei die Kamera derart eingerichtet ist, dass die Kamera in einem Betrieb der Vorrichtung den Schritt ausführt
   A) Aufnehmen von Rohbilddaten mindestens eines Kamerabildes und
      eine Auswerteeinrichtung,
      wobei die Auswerteeinrichtung derart mit der Kamera verbunden ist, dass die Auswerteeinrichtung in dem Betrieb der Vorrichtung die Rohbilddaten des mindestens einen Kamerabildes oder aus den Rohbilddaten des mindestens einen Kamerabildes abgeleitete Bilddaten erhält,
      wobei zumindest die Kamera oder die Auswerteeinrichtung derart ausgestaltet und eingerichtet ist, dass zumindest die Kamera oder die Auswerteeinrichtung in dem Betrieb der Vorrichtung die folgenden Schritte ausführt
   B) Auswerten der Rohbilddaten des mindestens einen Kamerabildes in einer Mehrzahl von Auswertungsschritten,
      wobei in zumindest einem aus der Mehrzahl von Auswertungsschritten die Rohbilddaten des mindestens einen Kamerabildes oder aus den Rohbilddaten des mindestens einen Kamerabildes abgeleitete Bilddaten mittels einer mathematischen Verknüpfung derart miteinander verarbeitet werden, dass Kombinationsbilddaten erzeugt werden,
   C) Ableiten der Information aus den Kombinationsbilddaten,
   D) Ausgeben der Information,
   E) Bestimmen eines Ist-Maßes für eine Datenqualität der Rohbilddaten mindestens eines Kamerabildes vor oder nach zumindest einem aus der Mehrzahl von Auswertungsschritten in Schritt B),
   F) Bestimmen einer Abweichung zwischen dem Ist-Maß für die Datenqualität und einem Soll-Maß für die Datenqualität der Rohbilddaten mindestens eines Kamerabildes, und
   G) erneutes Aufnehmen aller Rohbilddaten derjenigen Kamerabilder, für welche die in Schritt F) bestimmte Abweichung größer ist als ein vorgegebener Schwellenwert und erneutes Ausführen zumindest eines Auswertungsschrittes aus Schritt B) und der Schritte C) bis F) entweder bis die in Schritt F) bestimmte Abweichung für die Rohbilddaten aller Kamerabilder aus der Mehrzahl von Kamerabildern kleiner ist als der Schwellenwert oder bis eine vorgegebene Abbruchbedingung erfüllt ist,
wobei die Vorrichtung eine holographische Vorrichtung ist und die Vorrichtung derart eingerichtet, dass die Vorrichtung in dem Betrieb der Vorrichtung das Objekt mit elektromagnetischer Strahlung mit genau einer diskreten Wellenlänge oder mit einer Mehrzahl von diskreten Wellenlängen beleuchtet,
wobei die Kombinationsbilddaten ein holographisches Bild repräsentieren und die erzeugte Information entweder eine räumliche Phasenverteilung der von dem Objekt zumindest reflektierten oder gestreuten elektromagnetischen Strahlung jeweils genau einer Wellenlänge oder eine räumliche Verteilung einer synthetischen Phase der von dem Objekt zumindest reflektierten oder gestreuten elektromagnetischen Strahlung mit der Mehrzahl von diskreten Wellenlängen beinhaltet, und
wobei das Ist-Maß für die Datenqualität der Rohbilddaten ausgewählt ist aus einer Gruppe die besteht aus Parametern einer Phasenschiebungsoperation auf den Kombinationsbilddaten, einer Korrelation zwischen den Kombinationsbilddaten des Objekts und den Kombinationsbilddaten eines Referenzobjekts, einer mittleren Amplitude der Kombinationsbilddaten und einem Kontrast einer bekannten Struktur des Objekts in den Kombinationsbilddaten.

Soweit zuvor Aspekte der Erfindung im Hinblick auf das Verfahren zum Erzeugen einer Information aus mindestens einem Kamerabild eines Objekts beschrieben wurden, so gelten diese auch für die Vorrichtung zum Erzeugen einer Information aus mindestens einem Kamerabild eines Objekts. Insbesondere ist die erfindungsgemäße Vorrichtung zum Ausführen des erfindungsgemäßen Verfahrens und seiner Ausführungsformen geeignet. Soweit eine Ausführungsform des Verfahrens mit einer Ausführungsform der Vorrichtung gemäß dieser Erfindung ausgeführt wird, so weist die Vorrichtung die entsprechenden Einrichtungen hierfür auf oder die Kamera und/oder die Auswerteeinrichtung sind derart ausgestaltet und eingerichtet, dass sie in dem Betrieb der Vorrichtung die entsprechenden Verfahrensschritte ausführen. Die alphabetische Bezeichnung der Verfahrensschritte ist in der Beschreibung des Verfahrens die gleiche wie in der Beschreibung der Vorrichtung. Weitere Vorteile, Merkmale und Anwendungsmöglichkeiten der vorliegenden Erfindung werden anhand der folgenden Beschreibung von Ausführungsformen und der dazugehörigen Figuren deutlich. In den Figuren sind gleiche Elemente mit gleichen Bezugszeichen bezeichnet.
- Figur 1: ist ein schematisches Flussdiagramm eines nicht zur Erfindung gehörenden Verfahrens zum Erzeugen einer Information aus mindestens einem Kamerabild eines Objekts.
- Figur 2: ist ein schematisches Flussdiagramm einer weiteren Ausführungsform des erfindungsgemäßen Verfahrens, wobei mit dem Verfahren mit Hilfe eines Differenzhologramms eine Höhenkarte des Objekts erzeugt wird.

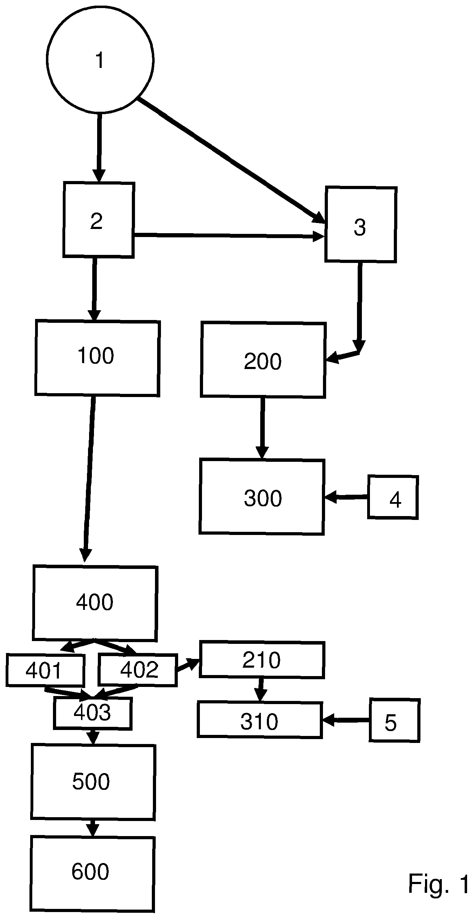

Figur 1 zeigt ein Flussdiagramm eines Verfahrens, bei welchem in einem Schritt 100 die Rohbilddaten genau eines Kamerabildes eines Objekts 1 mit einer Kamera 2 aufgenommen werden.

Gleichzeitig mit dem Aufnehmen der Rohbilddaten wird in Schritt 200 eine Erschütterung der Kamera 2 und des Objekts 1 mit Hilfe eines Beschleunigungssensors 3 erfasst. Die erfasste Erschütterung dient als Ist-Maß für die Datenqualität der Rohbilddaten des Kamerabildes. Das in dem Schritt 200 erfasste Ist-Maß für die Datenqualität der Rohbilddaten wird dann in Schritt 300 mit einem vorgegebenen Schwellenwert 4 als Soll-Maß für die Datenqualität verglichen. Ist eine Abweichung zwischen dem Ist-Maß und dem Soll-Maß für die Datenqualität größer als der Schwellenwert 4, so werden die Rohbilddaten des Kamerabildes des Objekts 1 verworfen und mit Hilfe der Kamera 2 erneut in Schritt 100 erfasst.

Anderenfalls werden die Rohbilddaten in einem Schritt 400 ausgewertet, wobei der Schritt 400 in der gezeigten Ausführungsform drei Auswertungsschritte 401, 402, 403 umfasst. In den Schritten 401 und 402 werden aus den Rohbilddaten eines einzigen Kamerabildes verschiedene Bilddaten abgeleitet, welche in dem Schritt 403 mathematisch miteinander verknüpft werden, sodass Kombinationsbilddaten erzeugt werden. Nach den Schritten 401, 402 erfolgt erneut eine Überprüfung der Datenqualität der Rohbilddaten. Dazu wird in Schritt 210 ein indirektes Maß für die Datenqualität in Form des Kontrastes der in den Schritten 401,402 abgeleiteten Bilddaten des Kamerabildes bestimmt. Dieses Ist-Maß wird erneut für die Datenqualität der Rohbilddaten in Schritt 310 mit einem vorgegebenen Schwellenwert 5 verglichen. Wenn die Abweichung zwischen dem Ist-Maß und dem Soll-Maß für die Datenqualität den vorgegebenen Schwellenwert 5 übersteigt, so werden die Bilddaten verworfen und die Rohbilddaten des Objekts 1 erneut mit der Kamera 2 erfasst.

Erst wenn beide Überprüfungen 200, 210 bzw. 300, 310 der Datenqualität der Rohbilddaten positiv waren, werden die abgeleiteten Bilddaten in Schritt 403 miteinander zu Kombinationsbilddaten verknüpft. Zudem wird in Schritt 500 aus den Kombinationsbilddaten die Information abgeleitet und in Schritt 600 die Information ausgegeben. Ein Beispiel für ein Verfahren gemäß des Ablaufs in Figur 1 ist ein Verfahren zur Erzeugung eines holographischen Bildes, wobei aus den Rohbilddaten eines einzigen Hologramms in den Schritten 401 und 402 erste und zweite Bilddaten abgeleitet werden und in Schritt 403 zum Erzeugen der Kombinationsbilddaten mathematisch miteinander verknüpft werden.

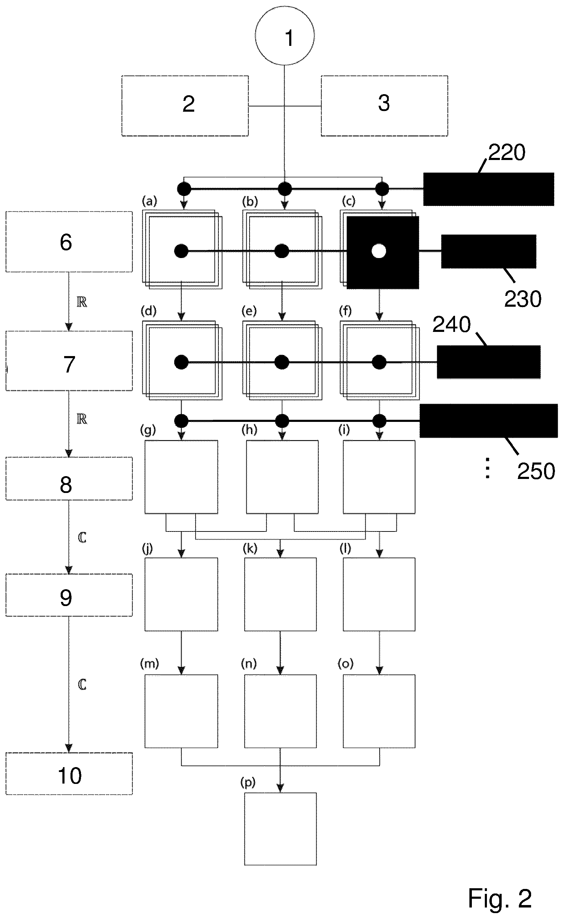

Figur 2 zeigt schematisch eine Ausführungsform des erfindungsgemäßen Verfahrens, bei der mit der Kamera 2 die Rohbilddaten einer Mehrzahl von Kamerabildern des Objekts 1 erfasst werden. Dargestellt ist die Abfolge einer numerischen Rekonstruktion für den Fall eines Hologramms mit drei diskreten Wellenlängen (a), (b) und (c). Für jede der drei Wellenlängen werden drei Phasenschritte erfasst, d.h. die Rohbilddaten von jeweils drei Kamerabildern. Auszuwerten sind also 3×3 Sätze von Rohbilddaten der Kamerabilder.

Gleichzeitig mit dem Aufnehmen der Kamerabilder erfasst der Beschleunigungssensor 3 Erschütterungen der Kamera 2 und/oder des Objekts 1. Eine erste Prüfung der Datenqualität der Rohbilddaten, d.h. ein Bestimmen eines Ist-Maßes für die Datenqualität der Rohbilddaten und ein Bestimmen einer Abweichung zwischen dem Ist-Maß und einem Soll-Maß für die Datenqualität erfolgt in Schritt 220 noch in einem Kamerarechner 6 vor dem Übertragen der Rohbilddaten an einen Verarbeitungsrechner 7. Wird festgestellt, dass die Kamera 2 und/oder das Objekt 1 während der Aufnahme von Rohbilddaten eines Kamerabildes über Maßen erschüttert wurden, so werden die entsprechenden Rohbilddaten des Kamerabildes verworfen und nur die verworfenen Kamerabilder werden erneut aufgenommen.

Ebenfalls noch im Kamerarechner 6 erfolgt in Schritt 230 eine zweite Bewertung der Datenqualität der Rohbilddaten anhand der mittleren Intensität der Rohbilddaten der einzelnen Kamerabilder. Zu erkennen ist, dass für die dritte Wellenlänge (c) das dritte Bild deutlich dunkler ist. Dieses Bild muss also verworfen werden und mit einer nachgeführten Belichtungszeit der Kamera 2 oder einer erhöhten Intensität des beleuchtenden Lasers erneut aufgenommen werden. Nur Rohbilddaten von Kamerabildern, welche die ersten zwei Überprüfungen 220, 230 der Datenqualität der Rohbilddaten erfolgreich durchlaufen haben, werden von dem Kamerarechner 6 an den Verarbeitungsrechner 7 übertragen. Auf diese Weise wird Zeit bei der Datenübertragung vom Kamerarechner in den Verarbeitungsrechner eingespart. Anderenfalls müsste die Übertragung auch für diejenigen Rohdaten von Kamerabildern wiederholt werden, deren Datenqualität nicht ausreichend ist.

Nach der Übertragung in den Speicher des Verarbeitungsrechners 7 werden komplexere Berechnungen in den Auswertungsschritten ausgeführt. Parallel zur Verarbeitung der Bilddaten wird immer wieder die Datenqualität der Rohbilddaten anhand von Kriterien oder Maßen überprüft, welche in vorangehenden Verarbeitungszuständen der Bilddaten noch nicht zugänglich waren.

In Schritt 240 wird beispielsweise durch zyklische Differenzbildung der einzelnen Kamerabilder die mittlere Modulation für jede Wellenlänge berechnet. Die mittlere Modulation verringert sich, wenn Erschütterungen während des Aufnehmens der Kamerabilder auf die Kamera 2 oder das Objekt 1 einwirken, da der Interferenzkontrast reduziert wird. Auch hier kann wieder ein Maß für die Datenqualität der Rohbilddaten definiert werden, welches, wenn es nicht erfüllt wird, zu einem Verwerfen des entsprechenden Kamerabildes und zu einem erneuten Aufnehmen der Rohbilddaten dieses Bildes führt.

Im nächsten Schritt werden die drei einzelnen Kamerabilder jeder Wellenlänge zu einem Hologramm 8 verrechnet, wobei aus den drei holographischen Bildern im nächsten Schritt drei Differenzhologramme 9 mit einer synthetischen Wellenlänge generiert werden. Abschließend wird aus diesen Differenzhologrammen eine Höhenkarte 10 der Oberfläche des Objekts 1 erstellt.

Es versteht sich, dass sich vor oder nach jedem Verarbeitungsschritt ein weiteres indirektes Maß für die Datenqualität der zugrundeliegenden Rohbilddaten definieren, das Ist-Maß bestimmen und mit einem Soll-Maß vergleichen lässt, sodass sich in jeder Verarbeitungsstufe Kriterien für ein Verwerfen eines oder mehrerer Kamerabildern bereitstellen lassen. Beispielsweise können während des Phasenschiebens beim Generieren des Hologramms 8 in Schritt 250 Kriterien für die Phasenschritte definiert werden, die als Maß für die Datenqualität der Rohbilddaten dienen.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

## Patentansprüche

1. Verfahren zum Erzeugen einer Information aus mindestens einem Kamerabild eines Objekts mit den Schritten
A) Aufnehmen (100) von Rohbilddaten des mindestens einen Kamerabildes,
B) Auswerten (400) der Rohbilddaten des mindestens einen Kamerabildes in einer Mehrzahl von Auswertungsschritten (401, 402, 403),
wobei in zumindest einem aus der Mehrzahl von Auswertungsschritten (401, 402, 403) die Rohbilddaten des mindestens einen Kamerabildes oder aus den Rohbilddaten des mindestens einen Kamerabildes abgeleitete Bilddaten mittels einer mathematischen Verknüpfung derart miteinander verarbeitet werden, dass Kombinationsbilddaten erzeugt werden,
C) Ableiten (500) der Information aus den Kombinationsbilddaten,
D) Ausgeben (600) der Information,
E) Bestimmen (200, 210) eines Ist-Maßes für eine Datenqualität der Rohbilddaten mindestens eines Kamerabildes vor oder nach zumindest einem aus der Mehrzahl von Auswertungsschritten in Schritt B),
F) Bestimmen (300, 310) einer Abweichung zwischen dem Ist-Maß für die Datenqualität und einem Soll-Maß für die Datenqualität der Rohbilddaten mindestens eines Kamerabildes, und
G) erneutes Aufnehmen (100) aller Rohbilddaten derjenigen Kamerabilder, für welche die in Schritt F) bestimmte Abweichung größer ist als ein vorgegebener Schwellenwert und erneutes Ausführen zumindest eines Auswertungsschrittes aus Schritt B) und der Schritte C) bis F) entweder bis die in Schritt F) bestimmte Abweichung für die Rohbilddaten aller Kamerabilder aus der Mehrzahl von Kamerabildern kleiner ist als der Schwellenwert oder bis eine vorgegebene Abbruchbedingung erfüllt ist,
wobei
das Verfahren ein holographisches Verfahren ist,
**dadurch gekennzeichnet, dass**
das Verfahren den Schritt aufweist Beleuchten des Objekts mit elektromagnetischer Strahlung mit genau einer diskreten Wellenlänge oder einer Mehrzahl von diskreten Wellenlängen,
wobei die Kombinationsbilddaten ein holographisches Bild repräsentieren und die erzeugte Information entweder eine räumliche Phasenverteilung der von dem Objekt zumindest reflektierten oder gestreuten elektromagnetischen Strahlung jeweils genau einer Wellenlänge oder eine räumliche Verteilung einer synthetischen Phase der von dem Objekt zumindest reflektierten oder gestreuten elektromagnetischen Strahlung mit der Mehrzahl von diskreten Wellenlängen beinhaltet, und
wobei das Ist-Maß für die Datenqualität der Rohbilddaten ausgewählt ist aus einer Gruppe die besteht aus Parametern einer Phasenschiebungsoperation auf den Kombinationsbilddaten, einer Korrelation zwischen den Kombinationsbilddaten des Objekts und den Kombinationsbilddaten eines Referenzobjekts, einer mittleren Amplitude der Kombinationsbilddaten und einem Kontrast einer bekannten Struktur des Objekts in den Kombinationsbilddaten.

2. Verfahren nach dem vorhergehenden Anspruch,
wobei in Schritt A) die Rohbilddaten genau eines Kamerabildes aufgenommen werden und
wobei in Schritt B) in zumindest einem aus der Mehrzahl von Auswertungsschritten aus den Rohbilddaten des genau einen Kamerabildes abgeleitete erste Bilddaten und aus den Rohbilddaten des genau einen Kamerabildes abgeleitete zweite Bilddaten mittels einer mathematischen Verknüpfung derart miteinander verarbeitet werden, dass die Kombinationsbilddaten erzeugt werden.

3. Verfahren nach Anspruch 1,
wobei in Schritt A) die Rohbilddaten einer Mehrzahl von Kamerabildern aufgenommen werden und
wobei in Schritt B) in zumindest einem aus der Mehrzahl von Auswertungsschritten entweder die Rohbilddaten eines ersten aus der Mehrzahl von Kamerabildern oder aus den Rohbilddaten des ersten Kamerabildes abgeleitete Bilddaten und entweder die Rohbilddaten eines zweiten aus der Mehrzahl von Kamerabildern oder aus den Rohbilddaten des zweiten Kamerabildes abgeleitete Bilddaten mittels einer mathematischen Verknüpfung verarbeitet werden, so dass die Kombinationsbilddaten erzeugt werden.

4. Verfahren nach einem der vorhergehenden Ansprüche, wobei die Schritte E) und F) ausgeführt werden zumindest
- nach Schritt A) und vor Schritt B), oder
- nach einem aus der Mehrzahl von Auswertungsschritten in Schritt B), wobei das Ist-Maß für die Datenqualität der Rohbilddaten in Schritt E) anhand der abgeleiteten Bilddaten bestimmt wird, oder
- nach Schritt B) und vor Schritt C), wobei das Ist-Maß für die Datenqualität der Rohbilddaten in Schritt E) anhand der Kombinationsbilddaten bestimmt wird, oder
- in Schritt C), wobei das Ist-Maß für die Datenqualität der Rohbilddaten in Schritt E) anhand einer Kombination einer Mehrzahl von Kombinationsdaten bestimmt wird.

5. Verfahren nach einem der vorhergehenden Ansprüche, wobei während des Aufnehmens der Rohbilddaten in Schritt A) eine Umgebungsbedingung mittels einer Messgröße erfasst wird, wobei die Messgröße das Ist-Maß für die Datenqualität und ein vorgegebener Wert für die Messgröße das Soll-Maß für die Datenqualität bildet.

6. Verfahren nach dem vorhergehenden Anspruch, wobei die Messgröße ausgewählt ist aus einer Gruppe bestehend aus einer Vibration des Objekts und/oder einer Kamera zum Erfassen des Objekts, einer Relativbewegung zwischen dem Objekt und der Kamera, einem Schalldruck, einer Helligkeit, einer Temperatur und einer Luftbewegung zwischen der Kamera und dem Objekt oder einer Kombination davon.

7. Verfahren nach einem der vorhergehenden Ansprüche, wobei das Ist-Maß für die Datenqualität der Rohbilddaten ausgewählt ist aus einer Gruppe, die besteht aus einer mittleren Helligkeit der Rohbilddaten oder der abgeleiteten Bilddaten eines Kamerabildes, dem Kontrast der Rohbilddaten oder der abgeleiteten Bilddaten eines Kamerabildes, einer Korrelation der Rohbilddaten oder der abgeleiteten Bilddaten zweier verschiedener Kamerabilder des gleichen Objekts, einer Änderung der Helligkeit oder des Kontrasts zwischen den Rohbilddaten und den abgeleiteten Bilddaten zweier verschiedener Kamerabilder des gleichen Objekts oder irgendeiner Kombination davon.

8. Verfahren nach einem der vorhergehenden Ansprüche, wobei entweder
die Schritte E) und F) nach dem Schritt A) und vor dem Schritt B) auf einem Kamerarechner ausgeführt werden und wobei vor dem Schritt B) die Rohbilddaten von dem Kamerarechner an einen Verarbeitungsrechner übertragen werden und die Auswertungsschritte des Schritts B) auf dem Verarbeitungsrechner ausgeführt werden,
oder
die Schritte E) und F) auf dem Kamerarechner ausgeführt werden, wobei ein erster Auswertungsschritt des Schritts B) auf dem Kamerarechner ausgeführt wird und ein zweiter Auswertungsschritt des Schritts B) auf dem Verarbeitungsrechner ausgeführt wird und wobei die abgeleiteten Bilddaten nach dem ersten Auswertungsschritt und vor dem zweiten Auswertungsschritt von dem Kamerarechner an den Verarbeitungsrechner übertragen werden.

9. Verfahren nach einem der vorhergehenden Ansprüche, wobei in Schritt A) für die Mehrzahl von diskreten Wellenlängen jeweils eine Mehrzahl von Rohbilddaten einer Mehrzahl von Kamerabildern aufgenommen wird, wobei in Schritt B) für jede aus der Mehrzahl von diskreten Wellenlängen Kombinationsbilddaten in Form eines Hologramms erzeugt werden und wobei in Schritt C) aus den Kombinationsbilddaten der Mehrzahl von diskreten Wellenlängen ein Differenzhologramm erzeugt wird.

10. Verfahren nach Anspruch 9, **dadurch gekennzeichnet, dass** in Schritt C) aus einer Mehrzahl von Differenzhologrammen eine Höhenkarte einer Oberfläche des Objekts als Information berechnet wird.

11. Verfahren nach einem der vorhergehenden Ansprüche, wobei das Ist-Maß für die Datenqualität der Rohbilddaten ausgewählt ist aus einer Gruppe die besteht aus einem Phasenrauschen in mindestens einem Differenzhologramm über einen ausgewählten Abschnitt des Objekts, einem Phasenrauschen in mindestens einem Differenzhologramm über einen Abschnitt eines Referenzkörpers mit bekannter Form, einer Korrelation zwischen dem Phasenrauschen in den Differenzhologrammen eines Abschnitts des Objekts und eines Abschnitts des Referenzkörpers, einer Korrelation zwischen einer Amplitude in dem Differenzhologramm des Objekts und einer Amplitude in dem Differenzhologramm eines Referenzkörpers, einer Verkippung der räumlichen Verteilungen der synthetischen Phase der von dem Objekt zumindest reflektierten oder gestreuten elektromagnetischen Strahlung mit einer ersten Auswahl an Wellenlängen aus der Mehrzahl von diskreten Wellenlängen und der räumlichen Verteilungen der synthetischen Phase der von dem Objekt zumindest reflektierten oder gestreuten elektromagnetischen Strahlung mit einer zweiten Auswahl an Wellenlängen aus der Mehrzahl von diskreten Wellenlängen, einem Vergleich einer mit einer ersten synthetischen Wellenlänge aufgenommenen Form eines Oberflächenabschnitts des Objekts und der mit einer zweiten synthetischen Wellenlänge aufgenommenen Form des gleichen Oberflächenabschnitts des Objekts.

12. Vorrichtung zum Erzeugen einer Information aus mindestens einem Kamerabild eines Objekts
mit einer Kamera, wobei die Kamera derart eingerichtet ist, das die Kamera in einem Betrieb der Vorrichtung den Schritt ausführt
A) Aufnehmen von Rohbilddaten mindestens eines Kamerabildes und
mit einer Auswerteeinrichtung,
wobei die Auswerteeinrichtung derart mit der Kamera verbunden ist, dass die Auswerteeinrichtung in dem Betrieb der Vorrichtung die Rohbilddaten des mindestens einen Kamerabildes oder aus den Rohbilddaten des mindestens einen Kamerabildes abgeleitete Bilddaten erhält,
wobei zumindest die Kamera oder die Auswerteeinrichtung derart ausgestaltet und eingerichtet ist, dass zumindest die Kamera oder die Auswerteeinrichtung in dem Betrieb der Vorrichtung die folgenden Schritte ausführt
B) Auswerten (400) der Rohbilddaten des mindestens einen Kamerabildes in einer Mehrzahl von Auswertungsschritten (401, 402, 403),
wobei in zumindest einem aus der Mehrzahl von Auswertungsschritten (401, 402, 403) die Rohbilddaten des mindestens einen Kamerabildes oder aus den Rohbilddaten des mindestens einen Kamerabildes abgeleitete Bilddaten mittels einer mathematischen Verknüpfung derart miteinander verarbeitet werden, dass Kombinationsbilddaten erzeugt werden,
C) Ableiten (500) der Information aus den Kombinationsbilddaten und
D) Ausgeben (600) der Information,
wobei weiterhin zumindest die Kamera oder die Auswerteeinrichtung derart ausgestaltet und eingerichtet ist, dass zumindest die Kamera oder die Auswerteeinrichtung in dem Betrieb der Vorrichtung die folgenden Schritte ausführt
E) Bestimmen (200, 210) eines Ist-Maßes für eine Datenqualität der Rohbilddaten mindestens eines Kamerabildes vor oder nach zumindest einem aus der Mehrzahl von Auswertungsschritten in Schritt B),
F) Bestimmen (300, 310) einer Abweichung zwischen dem Ist-Maß für die Datenqualität und einem Soll-Maß für die Datenqualität der Rohbilddaten mindestens eines Kamerabildes, und
G) erneutes Aufnehmen (100) aller Rohbilddaten derjenigen Kamerabilder, für welche die in Schritt F) bestimmte Abweichung größer ist als ein vorgegebener Schwellenwert und erneutes Ausführen zumindest eines Auswertungsschrittes aus Schritt B) und der Schritte C) bis F) entweder bis die in Schritt F) bestimmte Abweichung für die Rohbilddaten aller Kamerabilder aus der Mehrzahl von Kamerabildern kleiner ist als der Schwellenwert oder bis eine vorgegebene Abbruchbedingung erfüllt ist,
wobei die Vorrichtung eine holographische Vorrichtung ist,
**dadurch gekennzeichnet, dass**
die Vorrichtung derart eingerichtet, dass die Vorrichtung in dem Betrieb der Vorrichtung das Objekt mit elektromagnetischer Strahlung mit genau einer diskreten Wellenlänge oder einer Mehrzahl von diskreten Wellenlängen beleuchtet,
wobei die Kombinationsbilddaten ein holographisches Bild repräsentieren und die erzeugte Information entweder eine räumliche Phasenverteilung der von dem Objekt zumindest reflektierten oder gestreuten elektromagnetischen Strahlung jeweils genau einer Wellenlänge oder eine räumliche Verteilung einer synthetischen Phase der von dem Objekt zumindest reflektierten oder gestreuten elektromagnetischen Strahlung mit der Mehrzahl von diskreten Wellenlängen beinhaltet, und
wobei das Ist-Maß für die Datenqualität der Rohbilddaten ausgewählt ist aus einer Gruppe die besteht aus Parametern einer Phasenschiebungsoperation auf den Kombinationsbilddaten, einer Korrelation zwischen den Kombinationsbilddaten des Objekts und den Kombinationsbilddaten eines Referenzobjekts, einer mittleren Amplitude der Kombinationsbilddaten und einem Kontrast einer bekannten Struktur des Objekts in den Kombinationsbilddaten.

## Claims

1. A method of producing information from at least one camera image of an object comprising the steps:
A) recording (100) raw image data of the at least one camera image,
B) evaluating (400) the raw image data of the at least one camera image in a plurality of evaluation steps (401, 402, 403),
wherein in at least one of the plurality of evaluation steps (401, 402, 403) the raw image data of the at least one camera image or image data derived from the raw image data of the at least one camera image are processed by means of a mathematical linkage with each other in such a way that combination image data are produced,
C) deriving (500) the information from the combination image data,
D) outputting (600) the information,
E) determining (200, 210) an actual measure for a data quality of the raw image data of at least one camera image prior to or after at least one of the plurality of evaluation steps in step B),
F) determining (300, 310) a deviation between the actual measure for the data quality and a target measure for the data quality of the raw image data of at least one camera image, and
G) again recording (100) all raw image data of those camera images, for which the deviation determined in step F) is greater than a predetermined threshold value and again performing at least one evaluation step from step B) and steps C) to F) either until the deviation determined in step F) for the raw image data of all camera images from the plurality of camera images is less than the threshold value or until a predetermined termination condition is fulfilled, wherein the method is a holographic method, **characterised in that** the method includes the step
illuminating the object with electromagnetic radiation with exactly one discrete wavelength or a plurality of discrete wavelengths,
wherein the combination data represent a holographic image and the produced information includes a spatial phase distribution of the electromagnetic radiation of precisely one respective wavelength or a spatial distribution of a synthetic phase of the electromagnetic radiation with the plurality of discrete wavelengths, that is at least reflected or scattered by the object, and
wherein the actual measure for the data quality of the raw image data is selected from a group which comprises parameters of a phase shift operation on the combination data, a correlation between the combination data of the object and the combination data of a reference object and an average amplitude of the combination data, a contrast of a known structure of the object in the combination data.

2. The method according to the preceding claim,
wherein in step A) the raw image data of precisely one camera image are recorded, and
wherein in step B) in at least one of the plurality of evaluation steps first image data derived from the raw image data of the precisely one camera image and second image data derived from the raw image data of the precisely one camera image are processed by means of a mathematical linkage with each other in such a way that the combination image data are produced.

3. The method according to claim 1,
wherein in step A) the raw image data of a plurality of camera images are recorded and
wherein in step B) in at least one of the plurality of evaluation steps either the raw image data of a first of the plurality of camera images or image data derived from the raw image data of the first camera image and either the raw image data of a second of the plurality of camera images or image data derived from the raw image data of the second camera image are processed by means of a mathematical linkage in such a way that the combination image data are produced.

4. The method according to one of the preceding claims, wherein steps E) and F) are performed at least
- after step A) and before step B), or
- after one of the plurality of evaluation steps in step B), wherein the actual measure for the data quality of the raw image data is determined in step E) on the basis of the derived image data, or
- after step B) and before step C), wherein the actual measure for the data quality of the raw image data in step E) is determined on the basis of the combination image data, or
- in step C), wherein the actual measure for the data quality of the raw image data in step E) is determined on the basis of a combination of a plurality of combination data.

5. The method according to one of the preceding claims, wherein during recording of the raw image data in step A) an environmental condition is detected by a measurement variable, wherein the measurement variable is the actual measure for the data quality and a predetermined value for the measurement variable forms the target measure for the data quality.

6. The method according to one of the preceding claims, wherein the measurement variable is selected from a group comprising a vibration of the object and/or a camera for detecting the object, a relative movement between the object and the camera, an acoustic pressure, a brightness, a temperature and an air movement between the camera and the object or a combination thereof.

7. The method according to one of the preceding claims, wherein the actual measure for the data quality of the raw image data is selected from a group comprising an average brightness of the raw image data or the derived image data of a camera image, the contrast of the raw image data or the derived image data of a camera image, a correlation of the raw image data or the derived image data of two different camera images of the same object, a change in the brightness or the contrast between the raw image data and the derived image data of two different camera images of the same object or any combination thereof.

8. The method according to one of the preceding claims, wherein either
steps E) and F) are performed after step A) and before step B) on a camera computer and wherein before step B) the raw image data are transmitted by the camera computer to a processing computer and the evaluation steps of step B) are carried out on the processing computer,
or
steps E) and F) are carried out on the camera computer, wherein a first evaluation step of step B) is carried out on the camera computer and a second evaluation step of step B) is carried out on the processing computer and wherein the derived image data after the first evaluation step and before the second evaluation step are transmitted by the camera computer to the processing computer.

9. The method according to one of the preceding claims, wherein in step A) for the plurality of discrete wavelengths a respective plurality of raw image data of a plurality of camera images is recorded, wherein in step B) for each of the plurality of discrete wavelengths combination image data in the form of a hologram are produced and wherein in step C) a difference hologram is produced from the combination image data of the plurality of discrete wavelengths.

10. The method according to claim 9, wherein in step C) a height map of a surface of the object is calculated as information from the plurality of difference holograms.

11. The method according to claim one of the preceding claims, wherein the actual measure for the data quality of the raw image data is selected from a group which comprises a phase noise in at least one difference hologram over a selected portion of the object, a phase noise in at least one difference hologram over a portion of a reference body of known form, a correlation between the phase noise in the difference holograms of a portion of the object and a portion of the reference body, a correlation between an amplitude in the difference hologram of the object and an amplitude in the difference hologram of a reference body, a tilting of the spatial distributions of the synthetic phase of the electromagnetic radiation which is at least reflected or scattered by the object with a first selection of wavelengths from the plurality of discrete wavelengths and the spatial distributions of the synthetic phase of the electromagnetic radiation which is at least reflected or scattered by the object with a second selection of wavelengths from the plurality of discrete wavelengths, a comparison of a shape recorded with a first synthetic wavelength of a surface portion of the object and the shape recorded with a second synthetic wavelength of the same surface portion of the object.

12. An apparatus for producing information from at least one camera image of an object comprising a camera, wherein the camera is adapted such that in operation of the apparatus the camera carries out a step
A) recording raw image data of at least one camera image, and comprising an evaluation device,
wherein the evaluation device is so connected to the camera that in operation of the apparatus the evaluation device obtains the raw image data of the at least one camera image or image data derived from the raw image data of the at least one camera image,
wherein at least the camera or the evaluation device is so designed and adapted that at least the camera or the evaluation device in operation of the apparatus carries out the following steps
B) evaluating (400) the raw image data of the at least one camera image in a plurality of evaluation steps (401, 402, 403),
wherein in at least one of the plurality of evaluation steps (401, 402, 403) the raw image date of the at least one camera image or the image data derived from the raw image data of the at least one camera image are processed by a mathematical linkage with each other in such a way that combination image data are produced,
C) deriving (500) the information from the combination image data, and
D) outputting (600) the information,
wherein
further at least the camera or the evaluation device is so designed and adapted that at least the camera or the evaluation device in operation of the apparatus carries out the following steps
E) determining (200, 210) an actual measure for a data quality of the raw image data of at least one camera image prior to or after at least one of the plurality of evaluation steps in step B),
F) determining (300, 310) a deviation between the actual measure for the data quality and a target measure for the data quality of the raw image data of at least one camera image, and
G) again recording (100) all raw image data of those camera images, for which the deviation determined in step F) is greater than a predetermined threshold value and again performing at least one evaluation step from step B) and steps C) to F) either until the deviation determined in step F) for the raw image data of all camera images from the plurality of camera images is less than the threshold value or until a predetermined termination condition is fulfilled, wherein the method is a holographic method, **characterised in that** the method includes the step illuminating the object with electromagnetic radiation with exactly one discrete wavelength or a plurality of discrete wavelengths,
wherein the combination data represent a holographic image and the produced information includes a spatial phase distribution of the electromagnetic radiation of precisely one respective wavelength or a spatial distribution of a synthetic phase of the electromagnetic radiation with the plurality of discrete wavelengths, that is at least reflected or scattered by the object, and
wherein the actual measure for the data quality of the raw image data is selected from a group which comprises parameters of a phase shift operation on the combination data, a correlation between the combination data of the object and the combination data of a reference object and an average amplitude of the combination data, a contrast of a known structure of the object in the combination data.

## Revendications

1. Procédé de génération d'une information à partir d'au moins une image de caméra d'un objet, comprenant les étapes consistant à :
A) enregistrer (100) des données d'image brutes de ladite au moins une image de caméra,
B) évaluer (400) les données d'image brutes de ladite au moins une image de caméra grâce à une pluralité d'étapes d'évaluation (401, 402, 403),
dans au moins une parmi la pluralité d'étapes d'évaluation (401, 402, 403), les données d'image brutes de ladite au moins une image de caméra ou les données d'image dérivées des données d'image brutes de ladite au moins une image de caméra étant traitées ensemble au moyen d'une combinaison mathématique de telle manière que des données d'image combinées soient générées,
C) dériver (500) l'information à partir des données d'image combinées ;
D) distribuer (600) l'information,
E) déterminer (200, 210) une mesure réelle pour une qualité de données des données d'image brutes d'au moins une image de caméra avant ou après au moins une parmi la pluralité d'étapes d'évaluation de l'étape B),
F) déterminer (300, 310) un écart entre la mesure réelle de la qualité de données et une mesure nominale de la qualité de données des données d'image brutes d'au moins une image de caméra, et
G) enregistrer (100) à nouveau toutes les données d'image brutes des images de caméra pour lesquelles l'écart déterminé à l'étape F) est supérieur à une valeur de seuil prédéfinie, et mettre en oeuvre à nouveau au moins une étape d'évaluation issue de l'étape B) et les étapes C) à F) jusqu'à ce que l'écart déterminé à l'étape F) pour les données d'image brutes de toutes les images de caméra issues de la pluralité d'images de caméra soit inférieur à la valeur de seuil ou bien jusqu'à ce qu'une condition d'interruption prédéfinie soit satisfaite,
le procédé étant un procédé holographique,
**caractérisé en ce que**
le procédé comprend l'étape consistant à éclairer l'objet avec un rayonnement électromagnétique ayant précisément une longueur d'onde discrète ou une pluralité de longueurs d'onde discrètes,
les données d'image combinées représentant une image holographique et l'information générée contenant une répartition spatiale de phase du rayonnement électromagnétique au moins réfléchi ou diffusé par l'objet respectivement pour une longueur d'onde précise ou bien une répartition spatiale d'une phase synthétique du rayonnement électromagnétique au moins réfléchi ou diffusé par l'objet pour la pluralité de longueurs d'onde discrètes, et
la mesure réelle de la qualité de données des données d'image brutes étant choisie dans un groupe constitué de paramètres d'une opération de déphasage sur les données d'image combinées, d'une corrélation entre les données d'image combinées de l'objet et les données d'image combinées d'un objet de référence, d'une amplitude moyenne des données d'image combinées et d'un contraste d'une structure connue de l'objet dans les données d'image combinées.

2. Procédé selon la revendication précédente,
à l'étape A), les données d'image brutes de précisément une image de caméra étant enregistrées, et
à l'étape B), des premières données d'image dérivées des données d'image brutes de la précisément une image de caméra et des secondes données d'image dérivées des données d'image brutes de la précisément une image de caméra étant traitées ensemble au moyen d'une combinaison mathématique de telle manière que les données d'image combinées soient générées.

3. Procédé selon la revendication 1,
à l'étape A), les données d'image brutes d'une pluralité d'images de caméra étant enregistrées, et
à l'étape B) dans au moins une parmi la pluralité d'étapes d'évaluation, les données d'image brutes d'une première parmi la pluralité d'images de caméra ou des données d'image dérivées des données d'image brutes de la première image de caméra, et les données d'image brutes d'une seconde parmi la pluralité d'images de caméra ou des données d'image dérivées des données d'image brutes de la seconde image de caméra, étant traitées au moyen d'une combinaison mathématique de sorte que les données d'image combinées soient générées.

4. Procédé selon l'une quelconque des revendications précédentes, les étapes E) et F) étant mises en oeuvre au moins
- après l'étape A) et avant l'étape B), ou
- après une parmi la pluralité d'étapes d'évaluation de l'étape B), la mesure réelle de la qualité de données des données d'image brutes de l'étape E) étant déterminée à partir des données d'image dérivées, ou
- après l'étape B) et avant l'étape C), la mesure réelle de la qualité de données des données d'image brutes de l'étape E) étant déterminée à partir des données d'image combinées, ou
- à l'étape C), la mesure réelle de la qualité de données des données d'image brutes de l'étape E) étant déterminée à partir d'une combinaison d'une pluralité de données combinées.

5. Procédé selon l'une quelconque des revendications précédentes, pendant l'enregistrement des données d'image brutes de l'étape A), une condition d'environnement étant détectée au moyen d'une grandeur de mesure, la grandeur de mesure formant la mesure réelle de la qualité de données et une valeur prédéfinie de la grandeur de mesure formant la mesure nominale de la qualité de données.

6. Procédé selon la revendication précédente, la grandeur de mesure étant choisie dans un groupe constitué d'une vibration de l'objet et/ou d'une caméra permettant de détecter l'objet, d'un mouvement relatif entre l'objet et la caméra, d'une pression acoustique, d'une luminosité, d'une température et d'un mouvement d'air entre la caméra et l'objet, ou d'une combinaison de ceux-ci.

7. Procédé selon l'une quelconque des revendications précédentes, la mesure réelle de la qualité de données des données d'image brutes étant choisie dans un groupe constitué d'une luminosité moyenne des données d'image brutes ou des données d'image dérivées d'une image de caméra, du contraste des données d'image brutes ou des données d'image dérivées d'une image de caméra, d'une corrélation des données d'image brutes ou des données d'image dérivées de deux images de caméra différentes du même objet, d'un changement de luminosité ou de contraste entre les données d'image brutes et les données d'image dérivées de deux images de caméra différentes du même objet, ou d'une quelconque combinaison de ceux-ci.

8. Procédé selon l'une quelconque des revendications précédentes, soit
les étapes E) et F) étant mises en oeuvre après l'étape A) et avant l'étape B) sur un calculateur de caméra et, avant l'étape B), les données d'image brutes étant transmises du calculateur de caméra vers un calculateur de traitement et les étapes d'évaluation de l'étape B) étant mises en oeuvre sur le calculateur de traitement,
soit
les étapes E) et F) étant mises en oeuvre sur le calculateur de caméra, une première étape d'évaluation de l'étape B) étant mise en oeuvre sur le calculateur de caméra et une seconde étape d'évaluation de l'étape B) étant mise en oeuvre sur le calculateur de traitement, et les données d'image dérivées étant transmises du calculateur de caméra vers le calculateur de traitement après la première étape d'évaluation et avant la seconde étape d'évaluation.

9. Procédé selon l'une quelconque des revendications précédentes, à l'étape A), pour la pluralité de longueurs d'onde discrètes, une pluralité de données d'image brutes d'une pluralité d'images de caméra étant respectivement enregistrées, à l'étape B), pour chacune parmi la pluralité de longueurs d'onde discrètes, des données d'image combinées étant générées sous la forme d'un hologramme, et à l'étape C), un hologramme différentiel étant généré à partir des données d'image combinées de la pluralité de longueurs d'onde discrètes.

10. Procédé selon la revendication 9, **caractérisé en ce que**, à l'étape C), une carte d'altitude d'une surface de l'objet est calculée en tant qu'information à partir d'une pluralité d'hologrammes différentiels.

11. Procédé selon l'une quelconque des revendications précédentes, la mesure réelle de la qualité de données des données d'image brutes étant choisie dans un groupe constitué d'un bruit de phase dans au moins un hologramme différentiel sur une partie sélectionnée de l'objet, d'un bruit de phase dans au moins un hologramme différentiel sur une partie d'un corps de référence de forme connue, d'une corrélation entre le bruit de phase dans les hologrammes différentiels d'une partie de l'objet et d'une partie du corps de référence, d'une corrélation entre une amplitude dans l'hologramme différentiel de l'objet et une amplitude dans l'hologramme différentiel d'un corps de référence, d'un basculement des distributions spatiales de la phase synthétique du rayonnement électromagnétique au moins réfléchi ou diffusé par l'objet avec une première sélection de longueurs d'onde parmi la pluralité de longueurs d'onde discrètes et des distributions spatiales de la phase synthétique du rayonnement électromagnétique au moins réfléchi ou diffusé par l'objet avec une seconde sélection de longueurs d'onde parmi la pluralité de longueurs d'onde discrètes, d'une comparaison entre une forme, enregistrée avec une première longueur d'onde synthétique, d'une partie de surface de l'objet et la forme, enregistrée avec une seconde longueur d'onde synthétique, de la même partie de surface de l'objet.

12. Dispositif de génération d'une information à partir d'au moins une image de caméra d'un objet
avec une caméra, la caméra étant conçue de telle manière que, lors d'un fonctionnement du dispositif, la caméra mette en oeuvre l'étape consistant à :
A) enregistrer des données d'image brutes d'au moins une image de caméra et
avec un dispositif d'évaluation,
le dispositif d'évaluation étant relié à la caméra de telle manière que, lors du fonctionnement du dispositif, le dispositif d'évaluation reçoive les données d'image brutes de ladite au moins une image de caméra ou des données d'image dérivées des données d'image brutes de ladite au moins une image de caméra,
au moins la caméra ou le dispositif d'évaluation étant configuré et conçu de telle manière qu'au moins la caméra ou le dispositif d'évaluation mette en oeuvre les étapes ci-dessous lors du fonctionnement du dispositif :
B) évaluer (400) les données d'image brutes de ladite au moins une image de caméra grâce à une pluralité d'étapes d'évaluation (401, 402, 403),
dans au moins une parmi la pluralité d'étapes d'évaluation (401, 402, 403), les données d'image brutes de ladite au moins une image de caméra ou des données d'image dérivées des données d'image brutes de ladite au moins une image de caméra étant traitées ensemble au moyen d'une combinaison mathématique de telle manière que des données d'image combinées soient générées,
C) dériver (500) l'information à partir des données d'images combinées ; et
D) distribuer (600) l'information,
en outre au moins la caméra ou le dispositif d'évaluation étant configuré et conçu de telle manière que, lors du fonctionnement du dispositif, au moins la caméra ou le dispositif d'évaluation mette en oeuvre les étapes ci-dessous :
E) déterminer (200, 210) une mesure réelle d'une qualité de données des données d'image brutes d'au moins une image de caméra avant ou après au moins une parmi la pluralité d'étapes d'évaluation de l'étape B),
F) déterminer (300, 310) un écart entre la mesure réelle de la qualité des données et une mesure nominale de la qualité de données des données d'image brutes d'au moins une image de caméra, et
G) enregistrer (100) à nouveau toutes les données d'image brutes des images de caméra pour lesquelles l'écart déterminé à l'étape F) est supérieur à une valeur de seuil prédéfinie et mettre en oeuvre à nouveau au moins une étape d'évaluation issue de l'étape B) et les étapes C) à F) jusqu'à ce que l'écart déterminé à l'étape F) pour les données d'image brutes de toutes les images de caméra issues de la pluralité d'images de caméra soit inférieur à la valeur de seuil ou bien jusqu'à ce qu'une condition d'interruption prédéfinie soit satisfaite,
le dispositif étant un dispositif holographique,
**caractérisé en ce que**
le dispositif est conçu de telle manière que, lors du fonctionnement du dispositif, le dispositif éclaire l'objet avec un rayonnement électromagnétique présentant de manière précise une longueur d'onde discrète ou une pluralité de longueurs d'onde discrètes,
les données d'image combinées représentant une image holographique et l'information générée contenant une répartition spatiale de phase du rayonnement électromagnétique au moins réfléchi ou diffusé par l'objet respectivement pour une longueur d'onde précise ou bien une répartition spatiale d'une phase synthétique du rayonnement électromagnétique au moins réfléchi ou diffusé par l'objet pour la pluralité de longueurs d'onde discrètes, et
la mesure réelle de la qualité de données des données d'image brutes étant choisie dans un groupe constitué de paramètres d'une opération de déphasage sur les données d'image combinées, d'une corrélation entre les données d'image combinées de l'objet et les données d'image combinées d'un objet de référence, d'une amplitude moyenne des données d'image combinées et d'un contraste d'une structure connue de l'objet dans les données d'image combinées.
